# EUROPEAN PATENT APPLICATION

(11) **EP 4 560 846 A1**
(43) Date of publication of application: **28.05.2025**
(21) Application number: 23856465.2
(22) Date of filing: 08.08.2023
(51) Int. Cl.: H01R 27/00

(54) **SCREW AND QUICK-LOCK COMPATIBLE STRUCTURE FOR LOW-POWER POWER SUPPLY**

(30) Priority: 25.08.2022 CN 202211027745
(71) Applicant: Anhui Sunchu Intelligence Technology Joint Stock Co., Ltd., Maanshan, Anhui 238200 (CN); Delta Electronics, Inc., Taoyuan City 33341 (TW)
(72) Inventor: DAI, Fangfang, Maanshan, Anhui 238200 (CN); HUANG, Min-Ling, Taoyuan City 33341 (TW); HUANG, Ding-Jun, Taoyuan City 33341 (TW)
(74) Representative: Uexküll & Stolberg
(86) International application number: PCT/CN2023/111758
(87) International publication number: WO 2024/041375

(57) **Abstract**

ABSTRACT OF THE DISCLOSURE

A low-power power screw and quick lock compatible structure, relating to the field of electrical connections is provided and includes a socket (100), a quick-lock plug (200) and a screw-type plug (300). The quick-lock plug (200) and the screw-type plug (300) are respectively connected to the socket (100) one to one; the socket (100) comprises a socket housing (3), cantilevers (101), protrusions (102), fixing holes (103), and connecting holes (104). The fixing holes (103) are respectively located around the socket housing (3), the cantilevers (101) and the connecting holes (104) being connected to the outer surface of the socket housing (3), each the connecting hole (104) being located at a side edge of the corresponding cantilever (101), and the cantilevers (101) being provided with the protrusions (102); the socket (100) is connected to a motor by means of the fitting of socket screws (2) and the fixing holes (103), the quick-lock plug (200) is locked onto the socket (100) through the cantilevers (101), and the screw-type plug (300) is locked onto the socket (100) by means of the fitting of screw nuts (4) and the connecting holes (104). The socket (100) of the present invention is provided with the cantilevers (101) and the screw nuts (4), so that the socket (100) can be compatible with both screw locking and quick-lock latching. The quick-lock plug of the present disclosure is provided with three protruding points so that a lock rod will not come loose due to vibration during the operation of the motor.

## Description

### FIELD OF THE INVENTION

The present disclosure relates to a field of electrical connections, and more particularly to a low-power power screw and quick lock compatible structure.

### BACKGROUND OF THE INVENTION

There are two main ways to fix the plug and the socket of a power connector of a low-power servomotor in the existing market. One way is to lock and fasten with screws, which uses two or four M2 screws to lock the plug and the socket. The advantage of this way is that it fixes firmly and the locked signal connector is not easy to loosen. The disadvantage is that it requires tools, the assembly efficiency is low, and it is not convenient to operate when the space of some equipment is relatively small. The other way is to lock and fasten using a quick-lock type lock. In this way, a lock rod of the plug is buckled on the cantilevers of the socket. This operation is simple and convenient, it can be manually buckled and no tools are required. The assembly efficiency is high and it is not affected by the space. The disadvantage is that it is relatively not strong compared to the way of locking and fastening with the screws. Since each way has its advantages and disadvantages, it is difficult for the servomotor manufacturers to choose and to meet all customer requirements.

Through a search of prior art patent documents, it is found that the Chinese utility model patent with publication number CN216850635U discloses a stable panel socket, which relates to a technical field of panel sockets and effectively improves the convenience of use and the stability of fixing the panel socket. By the cooperation of the conductive sheet and the spring, the plug is firmly fixed when the panel socket is in use, so that the plug can be prevented from loosening, causing unstable power connection and affecting the use of the electrical appliance. The stable panel socket includes a positioning plate, one side of the bottom of the positioning plate is provided with a threaded hole, the interior of the threaded hole is in threaded connection with a screw, one side of the positioning plate is clamped with a socket body, the interior of the socket body is clamped with a fixing plate, and the fixing plate is provided with a fixing hole. A top block is fixedly connected to one side of the fixing plate, an inserting block is fixedly installed on the other side of the fixing plate, a sliding groove is formed in one side of the interior of the inserting block, and a sliding rod is slidably connected to the interior of the sliding groove. Accordingly, the mechanism described in this reference and the present disclosure are different in the concept of invention.

### SUMMARY OF THE INVENTION

In view of the defects in the prior art, an object of the present disclosure is to provide a low-power power screw and quick lock compatible structure.

In accordance with an aspect of the present disclosure, a low-power power screw and quick lock compatible structure is provided and includes a socket, a quick-lock plug and a screw-type plug. The quick-lock plug and the screw-type plug are respectively connected to the socket one to one.

The socket includes a socket housing, cantilevers, protrusions, fixing holes and connecting holes. The fixing holes are respectively disposed around the socket housing. The cantilevers and the connecting holes are in connection with outer surfaces of the socket housing, the connecting holes are located on lateral sides of the cantilevers, and the protrusions are disposed on the cantilevers.

The socket is connected to a motor through socket screws in cooperation with the fixing holes, the quick-lock plug is locked on the socket through the cantilevers, and the screw-type plug is locked on the socket through the connecting holes in cooperation with screw nuts.

In some embodiments, the socket further includes a head seat sealing ring, socket power terminals, a socket motor sealing ring, socket band brake terminals and a socket ground terminal. The head seat sealing ring is connected with the outer surface of the socket housing, and the socket motor sealing ring is connected with an inner surface of the socket housing. The socket power terminals, the socket band brake terminals and the socket ground terminals are distributed on the inner surface of the socket housing.

The socket ground terminal is located on a lateral side of the socket power terminals, and the socket band brake terminals are located on the bottoms of the socket power terminals.

In some embodiments, a spring of the socket ground terminal contacts a surface of the motor.

In some embodiments, the socket power terminals have hook plate structures, and the socket power terminals are soldered to an internal circuit of the motor.

In some embodiments, the quick-lock plug includes a quick-lock plug shell and a lock rod. The lock rod is connected to the quick-lock plug shell, and outer walls of the lock rod are clamped with inner walls of the cantilevers.

Cylinders and grooves are disposed on lateral sides of the quick-lock plug shell, the grooves are connected with the cylinders. Perforations and first convex parts are disposed on lateral sides of the lock rod, the cylinders are disposed in and connected with the perforations so as to allow the lock rod rotating around centers of the cylinders, and the lock rod is positioned through cooperation of the grooves and the first convex parts.

In some embodiments, a rib is disposed on the top of the quick-lock plug shell, a second convex part is disposed on the top of the lock rod, and the lock rod is locked on the quick-lock plug shell through cooperation of the second convex part and the rib.

In some embodiments, third convex parts are disposed on lateral sides of the lock rod.

When the quick-lock plug is inserted into the socket, the third convex parts are connected to and misaligned with the protrusions of the cantilevers.

In some embodiments, plug screws are located on two lateral sides of the screw-type plug shell and the plug screw are connected to the screw nuts correspondingly one to one.

The screw-type plug is locked on the socket through cooperation of the plug screws and the screw nuts.

In some embodiments, the quick-lock plug and the screw-type plug further includes a plastic plug core, plug band brake female terminals, plug power female terminals, a tail clamp nut, a wire clamp and a wire sealing ring.

The plastic plug core, the plug band brake female terminals and the plug power female terminals are connected to inner surfaces of the quick-lock plug shell and the screw-type plug shell in sequence. The wire clamp is sleeved on an outer wall of the wire sealing ring, and the wire clamp is connected to the bottoms of the quick-lock plug shell and the screw plug shell through the tail clamp nut.

In some embodiments, the tail clamp nut, the wire clamp and the wire sealing ring are hollow.

Compared with the prior art, the present disclosure has the following beneficial effects:

The cantilevers and the screw nuts are disposed on the socket of the present disclosure so that the socket is compatible with the quick-lock plug and the screw-type plug at the same time; three convex parts are disposed on the quick-lock plug, and therefore a triple protection is provided to the quick-lock plug. Consequently, the lock rod will not come loose due to vibration during the operation of the motor.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic exploded view illustrating a socket of the present disclosure;
FIG. 2 is a schematic view illustrating the structure of the socket of the present disclosure;
FIG. 3 is a schematic exploded view illustrating a quick-lock plug of the present disclosure;
FIG. 4 is a schematic view illustrating the quick-lock plug of the present disclosure connected with the socket;
FIG. 5 is a schematic partial view illustrating the structure of the quick-lock plug of the present disclosure in part;
FIG. 6 is a schematic view illustrating the quick-lock plug of the present disclosure;
FIG. 7 is a schematic exploded view illustrating a screw-type plug of the present disclosure.

### Description of reference numerals:

100: socket
101: cantilever
102: protrusion
103: fixing hole
104: connecting hole
200: quick-lock plug
201: cylinder
202: groove
203: perforation
204: first convex part
205: second convex part
206: third convex part
207: rib
300: screw-type plug
1: head seat sealing ring
2: socket screw
3: socket housing
4: screw nut
5: socket power terminal
6: socket motor sealing ring
7: socket band brake terminal
8: socket ground terminal
9: plastic plug core
10: plug band brake female terminal
11: plug power female terminal
12: tail clamp nut
13: wire clamp
14: wire sealing ring
15: quick-lock plug shell
16: lock rod
17: screw-type plug shell
18: plug screw

### DETAILED DESCRIPTION OF THE PREFERRED EMBODIMENT

The present disclosure is described in detail below with reference to specific embodiments. The following embodiments will help those skilled in the art to further understand the present disclosure but are not intended to limit the present disclosure in any form. It should be noted that, for those skilled in the art, several modifications and improvements can be made without departing from the concept of the present disclosure. These all belong to the protection scope of the present disclosure.

### Embodiment 1

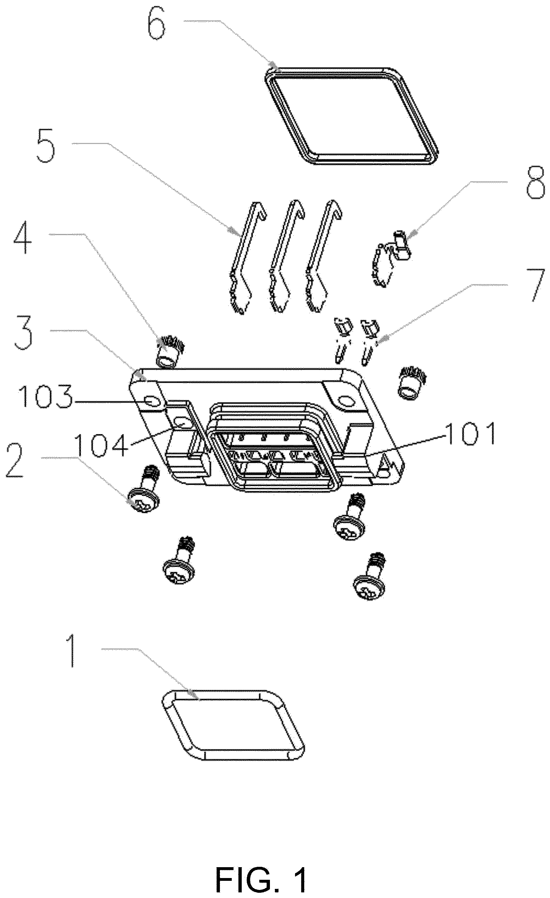

As shown in FIG. 1, the present disclosure provides a low-power power screw and quick lock compatible structure including a socket 100, a quick-lock plug 200 and a screw-type plug 300. The quick-lock plug 200 and the screw-type plug 300 are respectively connected to the socket 100 one to one.

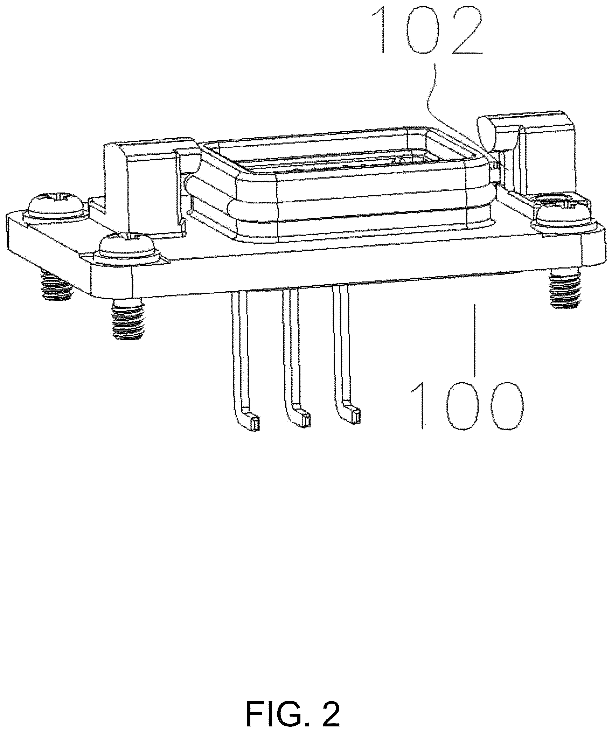

As shown in FIGS. 1 to 2, the socket 100 includes a socket housing 3, cantilevers 101, protrusions 102, fixing holes 103 and connecting holes 104. The fixing holes 103 are respectively disposed around the socket housing 3. The cantilevers 101 and the connecting holes 104 are in connection with an outer surface of the socket housing 3. The connecting holes 104 are located on lateral sides of the cantilevers 101, and the protrusions 102 are disposed on the cantilevers. The socket 100 is connected to a motor through socket screws 2 in cooperation with the fixing holes 103.

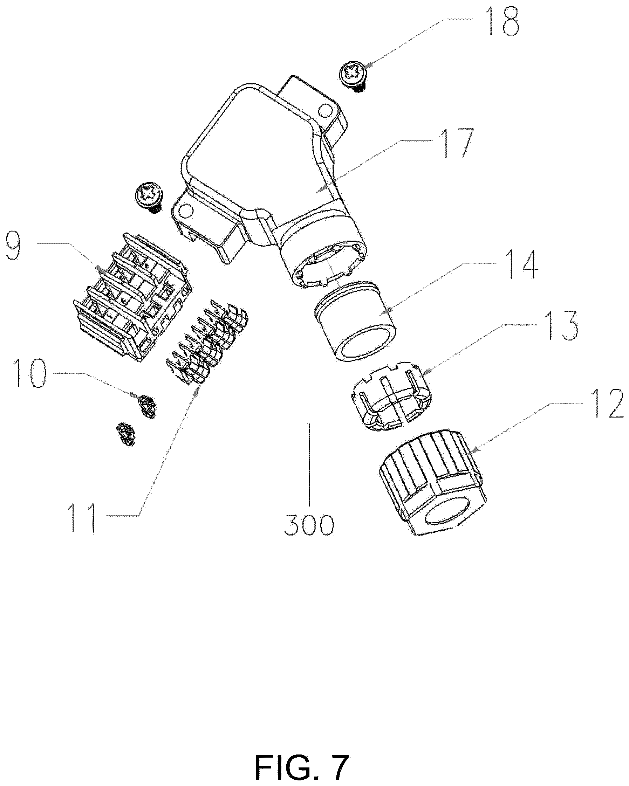

As shown in FIGS. 1 and 7, the quick-lock plug 200 is locked on the socket 100 through the cantilevers 101, and the screw-type plug 300 is locked on the socket 100 through the connecting holes 104 in cooperation with screw nuts 4.

The socket 100 further includes a head seat sealing ring 1, socket power terminals 5, a socket motor sealing ring 6, socket band brake terminals 7 and a socket ground terminal 8. The head seat sealing ring 1 is connected with the outer surface of the socket housing 3. The socket motor sealing ring 6 is connected with the inner surface of the socket housing 3. The socket power terminals 5, the socket band brake terminals 7 and the socket ground terminal 8 are distributed on the inner surface of the socket housing 3. The socket ground terminal 8 is located on a lateral side of the socket power terminals 5. The socket band brake terminals 7 are located on the bottoms of the socket power terminals 5. Preferably, a spring of the socket ground terminal 8 contacts a surface of the motor. The socket power terminals 5 have hook plate structures, and the socket power terminals 5 are soldered to an internal circuit of the motor.

More specifically, the socket 100 is redesigned to be fixed with the motor by utilizing screws. Four socket screws 2 and a shell of the motor are used to fasten the socket 100. The socket ground terminal 8 of the socket 100 includes a resilient member for performing spring-type contact. The resilient member of the socket ground terminal 8 contacts the surface of the motor by fastening the socket screws 2 to process a grounding. The U, V, and W power male terminals are designed as hook plate structures and are soldered to an internal circuit of the motor. The socket band brake terminals 7 are welded with wires and then led out. Three socket power terminals 5 with one socket ground terminal 8 are arranged in a row, and two band brake terminals 7 are arranged in a row. Consequently, a 4+2 arrangement is formed.

### Embodiment 2

The embodiment 2 is based on the embodiment 1. A triple protection is provided to the quick-lock plug 200 so that a lock rod 16 will not come loose due to vibration, specifically:

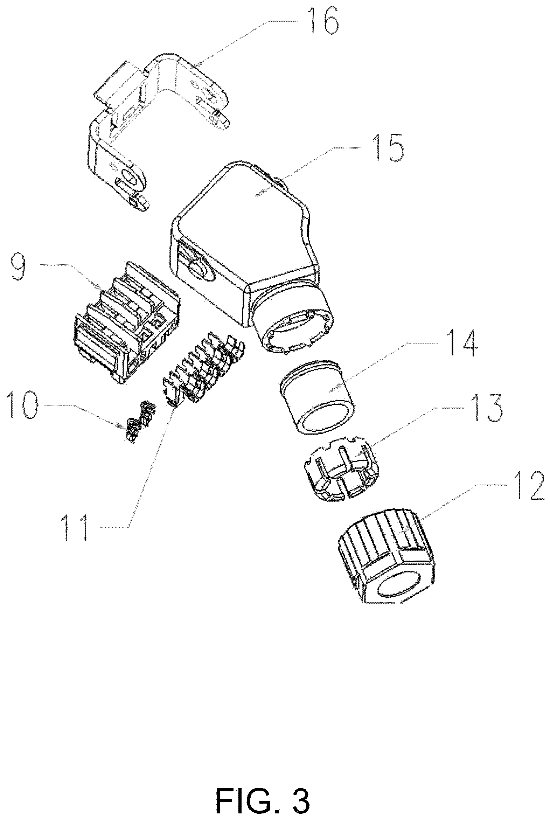

As shown in FIG. 3, the quick-lock plug 200 includes a quick-lock plug shell 15 and the lock rod 16. The lock rod 16 is connected to the quick-lock plug shell 15, and outer walls of the lock rod 16 are clamped with inner walls of the cantilevers 101.

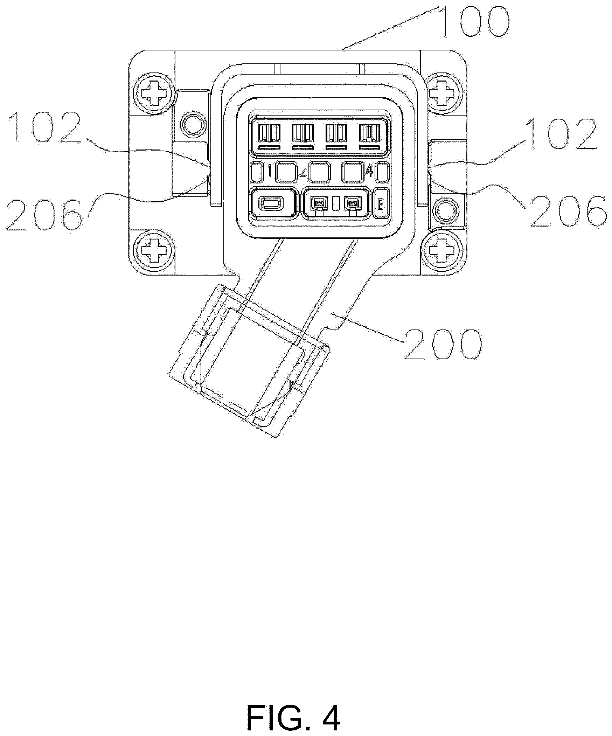

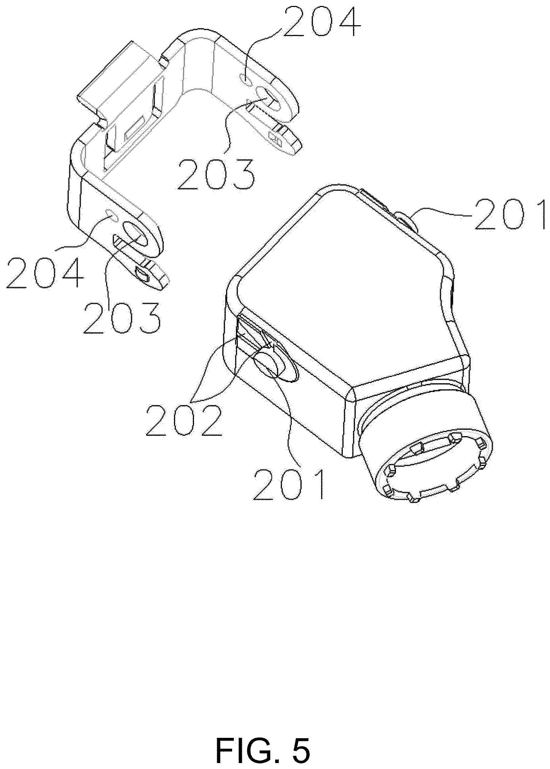

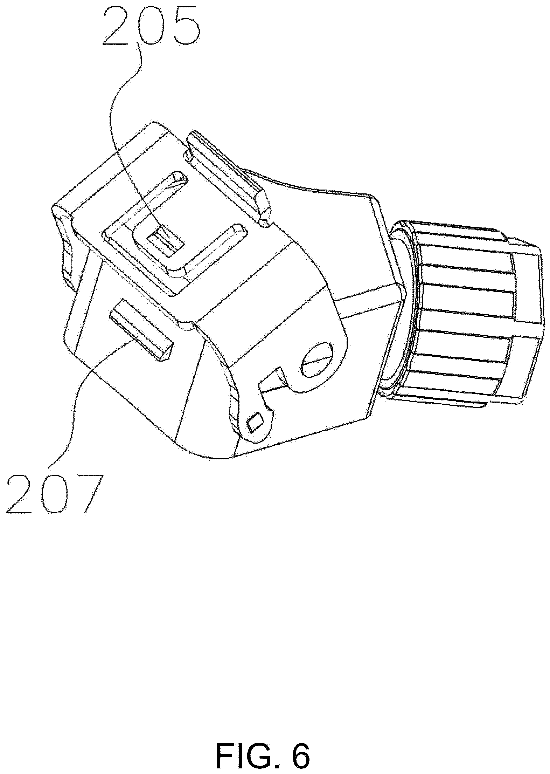

As shown in FIGS. 4 to 6, cylinders 201 and grooves 202 are disposed on lateral sides of the quick-lock plug shell 15. The grooves 202 are connected with the cylinders 201. A rib 207 is disposed on the top of the quick-lock plug shell 15. Perforations 203, first convex parts 204 and third convex parts 206 are disposed on lateral sides of the lock rod 16. A second convex part 205 is disposed on the top of the lock rod 16.

The cylinders 201 are disposed in and connected with the perforations 203 so as to allow the lock rod 16 rotating around centers of the cylinders 201. The lock rod 16 is positioned through cooperation of the grooves 202 and the first convex part 204s. The lock rod 16 is firmly locked on the quick-lock plug shell 15 through the cooperation of the second convex part 205 and the rib 207. After being firmly locked, the second convex part 205 and the rib 207 form a retaining force to prevent the quick-lock plug locking rod 16 from automatically retreating. When the quick-lock plug 200 is inserted into the socket 100, the third convex parts 206 are connected to and misaligned with the protrusions 102. After being latched, it can also prevent retreat, and the triple protection is provided to the lock rod 16 to ensure it not being loosen due to vibration during the operation of the motor.

As shown in FIG. 3, the quick-lock plug 200 further includes a plastic plug core 9, plug band brake female terminals 10, plug power female terminals 11, a tail clamp nut 12, a wire clamp 13 and a wire sealing ring 14. The plastic plug core 9, the plug band brake female terminals 10 and the plug power female terminals 11 are connected to inner surfaces of the quick-lock plug shell 15, and the wire clamp 13 is sleeved on an outer wall of the wire sealing ring 14. The wire clamp 13 is connected to the bottom of the quick-lock plug shell 15 through the tail clamp nut 12. The tail clamp nut 12, the wire clamp 13 and the wire sealing ring 14 are hollow, which is convenient for the assembly of the wiring harness.

More specifically, the lock rod 16 is positioned between a locked state and an opened state through the cooperation of the groove 202 and the first convex parts 204. During on-site assembly process, it is very fast and convenient to lock the quick-lock plug 200 with the socket 100 by simply pressing the finished wire harness of the quick-lock plug 200 downward in the direction corresponding to the socket 100, and after it is in place, moving the lock rod 16 in the direction toward the socket 100 so that it is parallel to the socket 100, and the quick-lock plug 200 is then locked with the socket 100.

### Embodiment 3

The embodiment 3 is based on the embodiment 1. The screw-type plug shell of the screw-type plug 300 is fixed through the screws, specifically:

As shown in FIG. 7, the screw-type plug 300 includes a screw-type plug shell 17 and two plug screws 18. The two plug screws 18 are located on two lateral sides of the screw-type plug shell 17 and the plug screws 18 are connected to the screw nuts 4 correspondingly one to one. The screw-type plug 300 is locked on the socket 100 through the cooperation of the plug screws 18 and the screw nuts 4. The two plug screws 18 are located on a diagonal line of the screw-type plug shell 17. Protrusions 102 are disposed on two sides of the screw-type plug shell 17, and the protrusions 102 are clamped with the cantilevers 101.

The screw-type plug 300 further includes a plastic plug core 9, plug band brake female terminals 10, plug power female terminals 11, a tail clamp nut 12, a wire clamp 13 and a wire sealing ring 14. The plastic plug core 9, the plug female terminals 10 and the plug power female terminals 11 are connected to inner surfaces of the screw-type plug shell 17 in sequence. The wire clamp 13 is sleeved on the outer wall of the wire sealing ring 14. The wire clamp 13 is connected to the bottom of the screw-type plug shell 17 through the tail clamp nut 12. The tail clamp nut 12, the wire clamp 13 and the wire sealing ring 14 are hollow, which is convenient for the assembly of the wiring harness.

In the description of the present disclosure, it is noted that the terms "upper", "lower", "front", "back", "left", "right", "vertical", "horizontal", "top", "bottom", "inside", "outside", etc., are used for indicating directions or positions, are based on the directions or positions shown in the drawings, are only for the convenience of describing the present disclosure and simplifying the description, and do not indicate or imply that the device or element indicated must have a specific direction or be in a specific direction, structure and operation. Therefore, these terms should not be understood as limiting the present disclosure.

While the disclosure has been described in terms of what is presently considered to be the most practical and preferred embodiments, it is intended to cover various modifications and similar arrangements included within the spirit and scope of the appended claims which are to be accorded with the broadest interpretation so as to encompass all such modifications and similar structures.

## Claims

1. A low-power power screw and quick lock compatible structure comprising:
a socket (100), a quick-lock plug (200) and a screw-type plug (300), wherein the quick-lock plug (200) and the screw-type plug (300) are respectively connected to the socket (100) one to one;
wherein the socket (100) comprises a socket housing (3), cantilevers (101), protrusions (102), fixing holes (103) and connecting holes (104), the fixing holes (103) are respectively disposed around the socket housing (3), the cantilevers (101) and the connecting holes (104) are in connection with an outer surface of the socket housing (3), the connecting holes (104) are located on lateral sides of the cantilevers (101), and the protrusions (102) are disposed on the cantilevers (101);
wherein the socket (100) is connected to a motor through socket screws in cooperation with the fixing holes (103), the quick-lock plug (200) is locked on the socket (100) through the cantilevers (101), and the screw-type plug (300) is locked on the socket (100) through the connecting holes (104) in cooperation with screw nuts (4).

2. The low-power power screw and quick lock compatible structure according to claim 1, wherein the socket (100) further comprises a head seat sealing ring (1), socket power terminals (5), a socket motor sealing ring (6), socket band brake terminals (7) and a socket ground terminal (8), wherein the head seat sealing ring (1) is connected with the outer surface of the socket housing (3), the socket motor sealing ring (6) is connected with an inner surface of the socket housing (3), and the socket power terminals (5), the socket band brake terminals (7) and the socket ground terminal (8) are distributed on the inner surface of the socket housing (3); wherein the socket ground terminal (8) is located on a lateral side of the socket power terminals (5), and the socket band brake terminal (7) are located on the bottoms of the socket power terminals (5).

3. The low-power power screw and quick lock compatible structure according to claim 2, wherein a resilient member of the socket ground terminal (8) contacts a surface of the motor.

4. The low-power power screw and quick lock compatible structure according to claim 2, wherein the socket power terminals (5) have hook plate structures, and the socket power terminals (5) are soldered to an internal circuit of the motor.

5. The low-power power screw and quick lock compatible structure according to claim 1, wherein the quick-lock plug (200) comprises a quick-lock plug shell (15) and a lock rod (16), the lock rod (16) is connected to the quick-lock plug shell (15), and outer walls of the lock rod (16) are clamped with inner walls of the cantilevers (101);
wherein cylinders (201) and grooves (202) are disposed on lateral sides of the quick-lock plug shell (15), the grooves (202) are connected with the cylinders (201), wherein perforations (203) and first convex parts (204) are disposed on lateral sides of the lock rod (16), the cylinders (201) are disposed in and connected with the perforations (203) so as to allow the lock rod (16) rotating around centers of the cylinders (201), and the lock rod (16) is positioned through cooperation of the grooves (202) and the first convex parts (204).

6. The low-power power screw and quick lock compatible structure according to claim 5, wherein a rib (207) is disposed on the top of the quick-lock plug shell (15), a second convex part (205) is disposed on the top of the lock rod (16), and the lock rod (16) is locked on the quick-lock plug shell (15) through cooperation of the second convex part (205) and the rib (207).

7. The low-power power screw and quick lock compatible structure according to claim 5, wherein third convex parts (206) are disposed on the lateral sides of the lock rod (16);
when the quick-lock plug (200) is inserted into the socket (100), the third convex parts (206) are connected to and misaligned with the protrusions (102) of the cantilevers (101).

8. The low-power power screw and quick lock compatible structure according to claim 1, wherein the screw-type plug (300) comprises a screw-type plug shell (17) and plug screws (18), the plug screws (18) are located on two lateral sides of the screw-type plug shell (17) and the plug screw (18) are connected to the screw nuts (4) correspondingly one to one;
wherein the screw-type plug (300) is locked on the socket (100) through cooperation of the plug screws (18) and the screw nuts (4).

9. The low-power power screw and quick lock compatible structure according to claims 5 or 8, wherein the quick-lock plug (200) and the screw-type plug (300) further comprises a plastic plug core (9), plug band brake female terminals (10), plug power female terminals (11), a tail clamp nut (12), a wire clamp (13) and a wire sealing ring (14);
wherein the plastic plug core (9), the plug band brake female terminals (10) and the plug power female terminals (11) are connected to inner surfaces of the quick-lock plug shell (15) and the screw-type plug shell (17) in sequence, the wire clamp (13) is sleeved on an outer wall of the wire sealing ring (14), and the wire clamp (13) is connected to the bottoms of quick-lock plug shell (15) or the screw plug shell through the tail clamp nut (12).

10. The low-power power screw and quick lock compatible structure according to claims 9, wherein the tail clamp nut (12), the wire clamp (13) and the wire sealing ring (14) are hollow.
